# DEMANDE DE BREVET EUROPEEN

(11) **EP 4 195 335 A1**
(43) Date de publication de la demande: **14.06.2023**
(21) Numéro de dépôt: 22212868.8
(22) Date de dépôt: 12.12.2022
(51) Int. Cl.: H01M 8/04029, H01M 8/04223, H01M 8/04302, H01M 8/0432, H01M 8/04701, H01M 16/00, H01M 10/613, H01M 10/625, H01M 10/6568

(54) **SYSTÈME DE GESTION THERMIQUE D'UN SYSTÈME HYBRIDE PILE À COMBUSTIBLE BATTERIE RECHARGEABLE**

(30) Priorité: 13.12.2021 FR 2113367
(71) Demandeur: Renault s.a.s, 92100 Boulogne Billancourt (FR)
(72) Inventeur: GERARD, David, 78084 guyancourt cedex (FR)

(57) **Abrégé**

Système de gestion thermique d'un système électrique hybride comprenant une pile à combustible (12) et une batterie rechargeable (24) sur une source de courant électrique externe, et comprenant des moyens de stockage (30) de fluide réchauffé provenant du fluide circulant dans le circuit de refroidissement de ladite batterie, après son réchauffement lors de la recharge de la batterie sur une source de courant électrique externe, et des moyens d'injection (31) dudit fluide stocké vers ledit circuit de refroidissement de ladite pile à combustible.

## Description

L'invention concerne le domaine des systèmes hybrides de stockage d'énergie électrique comprenant une pile à combustible et une batterie rechargeable sur une source de courant électrique externe. Plus particulièrement, elle concerne un système de gestion thermique d'un système hybride comprenant une pile à combustible et une batterie rechargeable pour un véhicule à traction électrique.

De manière connue, un système électrique hybride (désigné « *système pile à combustible* - *batterie* » par la suite) comprend un système pile à combustible et un système batterie agencés pour alimenter la chaîne de traction électrique et ainsi permettre l'avancement du véhicule. Dans un tel système hybride pile à combustible - batterie, la batterie peut être non rechargeable sur une source externe, la batterie étant rechargée lors du fonctionnement du véhicule par l'énergie électrique fournie par le système pile à combustible. Cette énergie stockée dans la batterie à bord du véhicule peut être ensuite utilisée pour le démarrage de la pile à combustible lors de la prochaine utilisation du véhicule, la pile à combustible pouvant avoir besoin d'un apport de calories pour lancer son processus électrochimique. Dans ce type d'agencement, le système peut potentiellement utiliser les deux sources d'énergie électrique ensemble ou séparément pour entraîner le véhicule, et le système pile à combustible permet aussi de recharger la batterie.

Couramment, la pile à combustible est une pile à hydrogène.

On connaît aussi des systèmes hybrides dans lesquels le système pile à combustible a un rôle de prolongateur d'autonomie de la batterie de traction, la batterie étant rechargeable sur une source de courant électrique externe. Ce type de système hybride est aussi appelé usuellement selon le vocable anglais « range extender » ou l'acronyme correspondant« REX ». Le système pile à combustible est ajouté à bord du véhicule qui comprend la batterie de traction électrique rechargeable, la taille de ladite batterie étant généralement optimisée, c'est-à-dire de taille réduite afin de limiter l'encombrement. Le véhicule peut fonctionner uniquement sur la batterie (cas des faibles temps de parcours par exemple) ou grâce à la combinaison du système pile à combustible et de la batterie (cas des longs trajets par exemple). Dans ce type de système hybride « REX », la pile à combustible est ainsi activée seulement en cas de besoin.

La batterie rechargeable d'un système hybride « REX » est ainsi préférentiellement rechargée depuis une source électrique externe, par exemple depuis un réseau de distribution électrique public, quand le véhicule est à l'arrêt, en la branchant sur une prise de courant électrique domestique usuelle ou de préférence sur un dispositif de prise à charge rapide.

Le système hybride comprend une unité de gestion optimisée de la pile à combustible et une unité de gestion optimisée de la batterie, et une unité centrale de gestion entre ces deux sources d'énergie électrique. Chaque unité de gestion optimisée comprend en outre des systèmes de gestion thermique séparés, dédiés respectivement au refroidissement de la pile à combustible qui chauffe en phase de fonctionnement d'usage, et au refroidissement de la batterie notamment lors de ses décharges en fonctionnement d'usage et lors de sa charge externe éventuelle, la chaleur dégagée étant évacuée par un échangeur de chaleur avec l'air extérieur au véhicule.

De manière générale, un inconvénient d'un système hybride pile à combustible - batterie est lié au fait que les besoins énergétiques nécessaires au démarrage de la pile à combustible peuvent être très importants lorsque la température ambiante est basse, notamment lorsque la température au sein de la pile est négative (inférieure à 0°C). En effet, le démarrage de la réaction électrochimique utile au fonctionnement de la pile est un processus complexe qui nécessite de réchauffer la pile progressivement pour atteindre une température de fonctionnement optimale. En particulier si la température est en dessous de 0°C, il faut commencer par chauffer la pile avant sa mise en route et sa production d'électricité.

Dans la demande de brevet CN108682879, il est décrit un système de gestion thermique d'un système hybride pile à combustible - batterie dans lequel la décharge de la batterie est utilisée pour chauffer un liquide stocké pour être employé à réchauffer la pile à combustible et permettre son démarrage. Ce système a l'inconvénient de décharger la batterie. De plus ce système ne concerne pas un système électrique hybride pile à combustible - batterie rechargeable depuis une source de courant électrique externe.

Le problème de démarrage de la pile à combustible d'un système hybride de type prolongateur d'autonomie (« REX »), peut être important dans la mesure où la pile à combustible n'est activée qu'en cas de besoin réel.

L'invention vise notamment à résoudre les inconvénients cités précédemment relatifs aux besoins énergétiques nécessaires au démarrage de la pile à combustible. Plus particulièrement elle vise un système hybride pile à combustible - batterie rechargeable de type « REX » d'un véhicule à traction électrique, la pile à combustible étant une énergie complémentaire de la batterie, venant en prolongateur d'autonomie.

A cet effet, l'invention propose un système de gestion thermique d'un système électrique hybride comprenant une pile à combustible et une batterie rechargeable sur une source de courant électrique externe, ledit système de gestion thermique dudit système électrique hybride comprenant un système de gestion thermique de ladite pile à combustible qui comporte un circuit de refroidissement de ladite pile à combustible utilisant un fluide pour refroidir la pile lors de son fonctionnement, et un système de gestion thermique de ladite batterie comportant un circuit de refroidissement de ladite batterie utilisant un fluide pour au moins refroidir ladite batterie lors de la recharge de la batterie sur une source de courant électrique.

Selon l'invention, ledit système de gestion thermique du système électrique hybride comprend des moyens de stockage de fluide réchauffé, provenant du fluide circulant dans le circuit de refroidissement de ladite batterie après son réchauffement lors de la recharge de ladite batterie sur une source de courant électrique externe, et des moyens d'injection dudit fluide stocké vers ledit circuit de refroidissement de ladite pile à combustible.

En particulier selon l'invention, lesdits moyens de stockage comprennent au moins un conteneur, isolé thermiquement, dans lequel est stocké ledit fluide réchauffé, ledit conteneur étant relié au circuit de refroidissement de la batterie et étant relié par une vanne pilotable au circuit de refroidissement de ladite pile à combustible.

Plus particulièrement, ladite vanne pilotable est une vanne à trois voies reliant ledit conteneur, la partie du circuit de refroidissement de ladite pile à combustible orientant le fluide vers la pile, et la partie dudit circuit de refroidissement située en aval d'un échangeur de chaleur que comprend ledit circuit de refroidissement de ladite pile.

Plus particulièrement selon l'invention, ledit système de gestion thermique du système électrique hybride comprend des moyens de détection de la température de la pile à combustible, et des moyens de commande pour injecter ledit fluide stocké, dans ledit circuit de refroidissement de la pile à combustible, si la température détectée est inférieure à une température de consigne, afin de réchauffer ladite pile, notamment quand une commande de démarrer la pile est reçue par le système de gestion de la pile à combustible.

La température de consigne peut être la température optimisée pour le démarrage de la pile à combustible du système pile à combustible considéré, voire de l'agencement général de tout le système hybride considéré. De préférence, ladite température de consigne se situe autour de 0°C. De préférence selon l'invention, ladite température de consigne est comprise entre +1°C (valeur incluse) et 0°C (valeur incluse).

De préférence selon l'invention, ledit système de gestion thermique du système électrique hybride comprend un capteur de température dudit fluide stocké, et des moyens de comparaison de la température mesurée par ledit capteur avec ladite température de consigne, afin de vérifier que le fluide est à une température suffisante lorsqu'il sera nécessaire de l'utiliser pour chauffer la pile, notamment en vue du démarrage de la pile. En particulier la température dudit fluide doit être supérieure à la dite température de consigne, sinon le démarrage de la pile pourra se faire selon une procédure de référence sans l'aide de la chaleur dudit fluide.

Selon un mode de réalisation préféré de l'invention, ledit fluide réchauffé est de l'eau additionnée de glycol.

De préférence selon l'invention, ledit système de gestion thermique du système électrique hybride est couplé à des moyens de gestion du niveau de charge de ladite batterie et à des moyens de commande du démarrage de la pile à combustible.

De préférence selon l'invention, ladite pile à combustible est une pile à hydrogène.

L'invention concerne aussi un procédé de gestion thermique d'un système électrique hybride comprenant une pile à combustible et une batterie rechargeable sur une source de courant électrique externe, ledit système électrique hybride comprenant un circuit de refroidissement de ladite pile à combustible utilisant un fluide pour refroidir la pile lors de son fonctionnement, et un circuit de refroidissement de ladite batterie utilisant un fluide pour au moins refroidir ladite batterie lors de la recharge de la batterie sur une source de courant électrique externe, et ledit procédé comprenant une étape durant laquelle on stocke du fluide réchauffé provenant du circuit de refroidissement de la batterie lorsque celle-ci est en charge sur ladite source de courant électrique externe, dans un conteneur relié au circuit de refroidissement de la batterie et au circuit de refroidissement de la pile, et une étape de détection de la température de la pile à combustible et de comparaison de la température ainsi détectée avec une température de consigne, et une étape de commande d'injection dudit fluide stocké, dans le circuit de refroidissement de la pile à combustible, pour réchauffer ladite pile si la température détectée au sein de la pile est inférieure à la température de consigne, notamment afin de faciliter le démarrage de ladite pile. En particulier ladite température de consigne est égale à une valeur située entre +1°C et 0°C.

En particulier, ledit procédé de gestion thermique s'applique à un système électrique hybride comprenant un système de gestion thermique tel que décrit précédemment.

L'invention concerne aussi un procédé de gestion du démarrage d'une pile à combustible d'un système électrique hybride comprenant une pile à combustible et un système de gestion thermique de ladite pile à combustible incluant un circuit de refroidissement de ladite pile à combustible pour refroidir la pile lors de son fonctionnement, et une batterie rechargeable sur une source de courant électrique externe et un système de gestion thermique de ladite batterie incluant un circuit de refroidissement de ladite batterie pour au moins refroidir ladite batterie lors de la recharge de la batterie sur une source de courant électrique externe, ledit procédé comprenant des étapes de mise en œuvre du procédé de gestion thermique décrit ci-dessus lorsque la température de la pile détectée avant son démarrage est inférieure à une température de consigne. En particulier ladite température de consigne est égale à une valeur située entre +1°C et 0°C.

En outre ledit procédé de gestion du démarrage de la pile à combustible comprend une étape de mesure de la température dudit fluide stocké, et de comparaison de la température mesurée avec ladite température de consigne, afin de vérifier que le fluide est à une température suffisante, au moins supérieure à ladite température de consigne au moment où il est nécessaire de l'utiliser pour chauffer la pile. Si la température mesurée est inférieure ou égale à la température de consigne, le procédé de démarrage appliquera une procédure de référence sans l'aide de la chaleur dudit fluide.

L'invention concerne aussi un véhicule automobile tracté par un groupe motopropulseur électrique alimenté électriquement par un système électrique hybride , comprenant une pile à combustible et unebatterie rechargeable sur une source de courant électrique externe, ledit véhicule comprenant un système de gestion thermique dudit système électrique hybride tel que décrit précédemment.

De préférence, la pile à combustible est activée pour prolonger l'autonomie de la batterie, la batterie rechargeable étant la source d'énergie électrique principale du véhicule.

D'autres particularités et avantages de l'invention ressortiront à la lecture de la description faite ci-après d'un mode de réalisation particulier de l'invention, donné à titre indicatif mais non limitatif, en référence au dessin annexé.

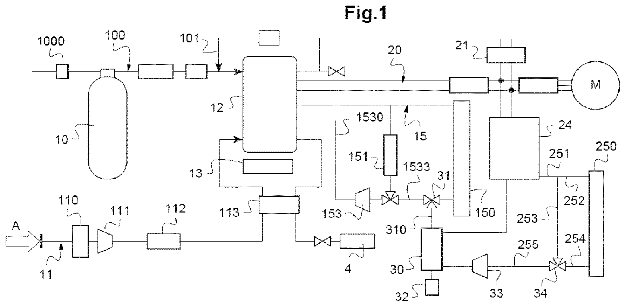

[Fig. 1] est un schéma illustrant un système électrique hybride pile à combustible - batterie rechargeable sur une source de courant électrique externe, conforme à l'invention, embarqué dans un véhicule automobile (non représenté).

Le système électrique hybride pile à combustible - batterie rechargeable représenté sur la figure 1 comprend un système pile à combustible et un système batterie rechargeable sur une source de courant électrique externe.

Selon l'exemple, les deux systèmes qui composent le système hybride pile à combustible - batterie rechargeable sont embarqués dans un véhicule automobile à traction par un groupe motopropulseur électrique, ils alimentent donc la chaîne de traction électrique M en énergie électrique pour permettre notamment le roulage du véhicule

Le système batterie rechargeable comprend une batterie de traction haute tension 24, rechargeable sur une source de courant électrique externe, telle que par exemple le réseau électrique public, via l'interface de recharge électrique 21, (chargeur). La batterie peut être par exemple, et non limitativement, une batterie Li-ion d'une énergie de 30 kWh.

Le système pile à combustible comprend une pile à hydrogène 12, utilisé selon l'exemple en tant que prolongateur d'autonomie (REX) du système électrique hybride. Le système d'énergie électrique hybride est ainsi une hybridation avec un nœud électrique entre la sortie pile, la sortie batterie et l'entrée du moteur électrique. La pile à combustible est montée électriquement en parallèle de la batterie de traction 24, tel que le représente le circuit électrique schématique 20. L'agencement électrique du système n'est pas commenté plus en détails car il n'est pas en soi l'objet de l'invention, et de plus il relève des connaissances de l'homme du métier.

La pile à combustible dihydrogène 12 est constituée d'un ensemble de cellules électrochimiques à hydrogène reliées électriquement entre elles. De manière connue en soi, le fonctionnement de la pile à combustible à dihydrogène est basé sur la réaction électrochimique entre les gaz dihydrogène (H2) et dioxygène (O2) au sein de la pile, pour produire de l'électricité, et aussi de la chaleur et de la vapeur d'eau (H2O). Comme mentionné plus haut, pour faire démarrer la réaction électrochimique, il faut une température suffisante, supérieure à 0°C.

La pile à combustible est alimentée en gaz dihydrogène selon le circuit d'alimentation 100 à partir d'au moins un réservoir de stockage 10 embarqué, dans lequel le dihydrogène est stocké sous pression (H2 liquide). Le réservoir se recharge depuis une source externe par l'interface de recharge 1000.
Le dihydrogène non consommé par la pile est remis en circulation selon le circuit de recirculation 101.
La pile est alimentée en oxygène à partir de l'air extérieur. L'air extérieur A est aspiré dans le circuit d'alimentation en oxygène 11. Cet air traverse un filtre à air 110, un compresseur 111 et un refroidisseur 112 puis traverse un humidificateur 113 pour entrer dans l'ensemble des différentes cellules électrochimiques à hydrogène qui constituent la pile.

L'eau vapeur produite, suite à la réaction électrochimique au sein du réacteur, est éliminée en sortie du réacteur de la pile et suit un circuit d'élimination en passant dans l'humidificateur 113 avant d'être envoyée dans le tuyau d'échappement 4 du véhicule.

Selon l'exemple, le système pile à combustible comprend une unité de gestion optimisée 13 de la pile à combustible, couramment dénommée par le sigle « FCCU » (qui est l'acronyme du terme anglais correspondant « Fuel Cell Control Unit »). Cette unité 13 comprend un système de gestion thermique de la pile, qui gère notamment un échangeur de chaleur 150.

Selon l'exemple, le système batterie rechargeable comprend une unité de gestion optimisée de la batterie, couramment dénommée par le sigle « BMS » qui est l'acronyme du terme anglais correspondant « Battery Management System ». Cette unité comporte un système de gestion thermique de la batterie gérant notamment le circuit de refroidissement de la batterie. Ce dernier a pour but de refroidir la batterie qui a tendance à s'échauffer notamment lors de sa recharge sur le réseau électrique externe, il comprend un échangeur de chaleur 250.

Le circuit de refroidissement de la pile à combustible et le circuit de refroidissement de la batterie comprennent chacun un réservoir non représenté sur la figure 1, qui contient du fluide refroidissement. Ces fluides sont de même nature. Pour chacun, selon l'exemple ce fluide est de l'eau glycolée. Chaque fluide de refroidissement circule respectivement dans le circuit de refroidissement respectif de la pile et de la batterie, en pouvant passer dans les échangeurs de chaleur 150, 250 respectifs de la pile à combustible et de la batterie rechargeable, pour refroidir respectivement la pile à combustible et de la batterie rechargeable quand c'est nécessaire.

De manière connue, le circuit de refroidissement respectif de la pile comprend un déioniseur 151.

Selon l'exemple, une unité centrale de gestion (composants électroniques, informatiques, capteurs) permet également la gestion du système électrique hybride par interaction avec les unités de gestion respectives de la batterie et de la pile à combustible, afin de gérer l'ensemble de ces deux sources d'énergie électriques.

Les systèmes de gestion thermique relatifs à la pile et à la batterie font partie aussi d'un système de gestion thermique globale du système électrique hybride, aussi partie de ladite unité centrale de gestion.

En outre, selon l'exemple conforme à l'invention, ce système de gestion du système électrique hybride comprend des moyens de gestion thermique utiles au démarrage de la pile à combustible, et qui, à cette fin, gèrent notamment l'interaction entre les fluides de refroidissement respectifs de la pile et de la batterie.

Outre des moyens électroniques /informatiques de gestion (calculateurs programmés, détecteurs), ces moyens de gestion thermique pour le démarrage de la pile comprennent notamment les composants énoncés ci-après.

Un conteneur 30 stocke le fluide chaud, issu du circuit de refroidissement de la batterie lorsque cette dernière est en charge sur la source de courant électrique externe, ledit conteneur, isolé thermiquement, étant relié à la fois au circuit de refroidissement de la batterie et au circuit de refroidissement de la pile à combustible. Ledit conteneur peut avoir une contenance de quelques litres.

Un circuit 310 relie ledit conteneur de stockage 30 au circuit de refroidissement de la pile à combustible, par l'intermédiaire d'une vanne pilotable 31, à trois voies selon l'exemple, située en aval de l'échangeur de chaleur 150 dudit circuit de refroidissement 15 de la pile, pour orienter le débit du fluide chaud dans la partie 1533, 1530 dudit circuit de refroidissement allant vers la pile, dans le but de transmettre une certaine quantité d'énergie (calories) apportées par le fluide réchauffé vers la pile, suivant la fonction régulation thermique du système pile à combustible.

Un capteur de température 32 permet de connaitre la température du fluide stocké. En outre des moyens de comparaison de la température mesurée par ledit capteur avec ladite température de consigne, lorsqu'il est nécessaire de utiliser ce fluide pour chauffer la pile, permettent de vérifier que le fluide est à une température suffisante, supérieure à une température de consigne , par exemple cette dernière étant égale à 0°C, notamment en vue du démarrage de la pile.

Cesdits moyens de gestion thermique comprennent également une pompe 33, située sur le circuit de refroidissement de la batterie, qui permet de remplir le conteneur de stockage 30 du fluide chaud arrivant depuis le circuit de refroidissement batterie. Ce stockage de fluide chaud, lorsqu'il est plein, est isolé du circuit afin qu'il conserve sa chaleur jusqu'à son utilisation.

Lors de la recharge de la batterie sur la source de courant électrique externe, notamment sur un dispositif de prise de courant à charge rapide, qui est un mode qui échauffe le plus la batterie, la chaleur produite au niveau de la batterie 24 réchauffe le fluide de refroidissement qui circule pour refroidir ladite batterie, le fluide pouvant par exemple atteindre une température d'environ 60-70°C.

Ce fluide ainsi réchauffé est envoyé par la pompe 33 située sur la boucle de refroidissement de la batterie vers le conteneur de stockage 30, en sortie de l'échangeur de chaleur 250 du circuit de refroidissement de la batterie (éléments de circuit 251, 252, 250, 254, 34, 255, 33). La température du fluide dans ledit conteneur 30 est contrôlée à l'aide du capteur de température 32.
Si la température détectée par le capteur 32 est très basse, au moins une partie du fluide réchauffé est récupérée directement en sortie du refroidissement de la batterie (éléments de circuit 251, 253, 34, 255, 33), sans passer par l'échangeur de chaleur 250 dudit circuit de refroidissement de la batterie.

La chaleur du fluide stocké peut être utilisée ensuite lors du prochain démarrage de la pile à combustible. Ainsi on ouvre la vanne à trois voies 31 entre le stockage du fluide chaud 30 et le circuit de refroidissement de la pile , pour transmettre les calories stockées au fluide de refroidissement de la pile, ce qui provoque une augmentation de la température du fluide de refroidissement circulant dans le circuit de refroidissement de la pile. Cette augmentation de la température du fluide de refroidissement du circuit de refroidissement de la pile permet, par le passage de ce fluide dans les canaux de la pile, de transmettre les calories à la pile et ainsi de la réchauffer, pour aider, voire rendre possible, le démarrage de la pile à combustible lorsque ce démarrage est demandé par le système de contrôle de l'énergie électrique du véhicule.

La pompe 153 du circuit de refroidissement de la pile à combustible et la vanne trois voies peuvent permettre de ramener du fluide chaud vers le conteneur de stockage 30.

Un procédé de pilotage du démarrage de la pile à combustible d'un système électrique hybride pile à combustible - batterie rechargeable tel que celui représenté sur la figure 1, peut se dérouler comme décrit ci-dessous selon les étapes suivantes.

Dans une étape préalable à la mise en œuvre du procédé de pilotage du démarrage de la pile à combustible, l'unité centrale de gestion du système électrique hybride surveille si la pile à combustible doit être démarrée, par exemple en fonction du niveau de charge de la batterie.

Si « NON » : la pile n'est pas démarrée.

Si « OUI » : le niveau de fluide réchauffé stocké dans le conteneur 30 est vérifié et sa température est vérifiée par le capteur de température 32.

Si « NON », c'est-à-dire si ces conditions sur le fluide ne sont pas vérifiées : le démarrage de la pile se fera selon la procédure de référence sans assistance du fluide réchauffé stocké. Dans cette procédure sans assistance, le démarrage est plus lent, la puissance électrique du véhicule est limitée.

Si « OUI », c'est-à-dire si les conditions (température du fluide et quantité de fluide) sur le fluide stocké dans le conteneur 30 permettant son utilisation pour assister le démarrage de la pile sont vérifiées : le système de gestion thermique de la pile décide d'activer l'assistance par le fluide réchauffé du conteneur 30, et dans une étape suivante, commande l'ouverture de la vanne 31 entre le conteneur de liquide réchauffé et le circuit de refroidissement 15 de la pile de manière à alimenter en fluide chaud le circuit de refroidissement de la pile (habituellement utilisé pour le refroidissement quand la pile en fonctionnement), afin de réchauffer cette pile pour aider son démarrage.

Quand les conditions minimales de température au sein de la pile sont atteintes pour le démarrage de la pile, le démarrage de la pile a donc lieu. Lorsque le démarrage est réalisé, l'alimentation du circuit de refroidissement de la pile par du fluide chauffé peut être arrêtée. Puis les débits respectifs des alimentations respectives en hydrogène et en air fournissant l'oxygène peuvent si nécessaires être augmentés, la montée en puissance de la pile est alors assez rapide.

Une fois la pile démarrée, le système de gestion thermique de la pile continue de suivre la température de la pile qui s'élève. Il est possible que ledit système commande d'injecter si besoin du fluide de refroidissement froid, c'est-à-dire à température ambiante, pouvant être stocké dans un autre réservoir non représenté sur la figure 1 par exemple, pour refroidir la pile lorsque celle-ci est en fonctionnement.

L'invention présente l'avantage de permettre le démarrage de la pile à combustible lorsque la température ambiante, et en particulier au niveau de la pile, est trop basse, et ce sans faire appel à l'énergie délivrée par la batterie, donc sans décharger la batterie. C'est particulièrement avantageux dans un système électrique hybride à prolongateur d'autonomie (« REX »), du fait que le démarrage de la pile est sollicité principalement quand la batterie a un faible niveau de charge bas. L'invention présente aussi un avantage économique important puisqu'elle utilise des calories qui auraient été perdues, directement dissipées dans l'atmosphère par le circuit de refroidissement de la batterie. Un avantage aussi est que le stockage de fluide chaud se fait sans perte de temps, pendant que la batterie se recharge sur une source électrique externe, par exemple quand le véhicule est immobilisé, par exemple la nuit ou pendant un temps de pose.

## Revendications

1. Système de gestion thermique d'un système électrique hybride comprenant une pile à combustible et une batterie rechargeable sur une source de courant électrique externe, ledit système de gestion thermique dudit système électrique hybride comprenant :
- un système de gestion thermique de ladite pile à combustible (12) comportant un circuit de refroidissement de ladite pile à combustible utilisant un fluide pour refroidir la pile lors de son fonctionnement, et
- un système de gestion thermique de ladite batterie (24) comportant un circuit de refroidissement de ladite batterie utilisant un fluide pour au moins refroidir ladite batterie lors de la recharge de la batterie sur une source de courant électrique,
**caractérisé en ce qu'**il comprend des moyens de stockage (30) du fluide réchauffé provenant du circuit de refroidissement de ladite batterie après son réchauffement lors de la recharge de ladite batterie sur une source de courant électrique externe, et des moyens d'injection (31) dudit fluide stocké vers ledit circuit de refroidissement de ladite pile à combustible.

2. Système de gestion thermique d'un système électrique hybride selon la revendication 1, **caractérisé en ce que** lesdits moyens de stockage comprennent au moins un conteneur (30), isolé thermiquement, dans lequel est stocké ledit fluide réchauffé, ledit conteneur étant relié au circuit de refroidissement de la batterie et étant relié par une vanne pilotable (31) au circuit de refroidissement de ladite pile à combustible.

3. Système de gestion thermique d'un système électrique hybride selon la revendication 2, **caractérisé en ce que** ladite vanne pilotable est une vanne à trois voies (31) reliant ledit conteneur (30), la partie du circuit de refroidissement de ladite pile à combustible orientant le fluide vers la pile(1533, 1530), et la partie dudit circuit de refroidissement de la pile à combustible située en aval d'un échangeur de chaleur (250) que comprend ledit circuit de refroidissement de la pile à combustible.

4. Système de gestion thermique d'un système électrique hybride selon l'une des revendications 1 à 3, caractérisé qu'il comprend des moyens de détection de la température de la pile à combustible, et des moyens de commande pour injecter ledit fluide stocké dans le circuit de refroidissement de la pile à combustible, si la température détectée est inférieure à une température de consigne.

5. Système de gestion thermique d'un système électrique hybride selon la revendication 5, **caractérisé en ce que** ladite température de consigne est comprise entre +1°C et 0°C.

6. Système de gestion thermique d'un système électrique hybride selon l'une des revendications 4 à 5, caractérisé qu'il comprend un capteur de température (32) dudit fluide stocké, et des moyens de comparaison de la température mesurée par ledit capteur avec ladite température de consigne.

7. Système de gestion thermique d'un système électrique hybride selon l'une des revendications 1 à 6, caractérisé qu'il est couplé à des moyens de gestion du niveau de charge de ladite batterie, et à des moyens de commande du démarrage de la pile à combustible.

8. Système de gestion thermique d'un système électrique hybride selon l'une des revendications 1 à 7, **caractérisé en ce que** ladite pile à combustible est une pile à hydrogène.

9. Procédé de gestion thermique d'un système électrique hybride comprenant une pile à combustible (12) et une batterie rechargeable (24) sur une source de courant électrique externe, ledit système électrique hybride comprenant un circuit de refroidissement de ladite pile à combustible utilisant un fluide pour refroidir la pile lors de son fonctionnement, et un circuit de refroidissement de ladite batterie utilisant un fluide pour au moins refroidir ladite batterie lors de la recharge de la batterie sur une source de courant électrique externe, ledit procédé étant **caractérisé en ce qu'**il comprend :
- une étape durant laquelle on stocke du fluide réchauffé provenant du circuit de refroidissement de la batterie lorsque celle-ci est en charge sur ladite source de courant électrique externe, dans un conteneur (30) relié au circuit de refroidissement de la batterie et au circuit de refroidissement de la pile, et
- une étape de détection de la température de la pile à combustible et de comparaison de la température détectée avec une température de consigne, et
- une étape de commande d'injection dudit fluide stocké dans le circuit de refroidissement de la pile à combustible, pour réchauffer ladite pile, si la température détectée au sein de la pile est inférieure à ladite température de consigne.

10. Véhicule automobile tracté par un groupe motopropulseur électrique alimenté électriquement par un système électrique hybride comprenant une pile à combustible (12) et une batterie rechargeable (24) sur une source de courant électrique externe, **caractérisé en ce qu'**il comprend un système de gestion thermique dudit système électrique hybride selon l'une des revendications 1 à 8.
